# DEMANDE DE BREVET EUROPEEN

(11) **EP 2 708 392 A1**
(43) Date de publication de la demande: **19.03.2014**
(21) Numéro de dépôt: 13183219.8
(22) Date de dépôt: 05.09.2013
(51) Int. Cl.: B60J 1/20

(54) **Store de protection avec moyens de réglages**

(30) Priorité: 17.09.2012 FR 1258699
(71) Demandeur: Vision Systems Automotive, 69530 Brignais (FR)
(72) Inventeur: Bruneton, Denis, 69670 Vaugneray (FR)
(74) Mandataire: Verriest, Philippe

(57) **Abrégé**

La présente invention a pour objet un store de protection (1) pour véhicule comportant - un tube d'enroulement (3), un écran (4), un axe (5), des moyens de blocage (10) de la rotation de l'axe (5), et des moyens de rappel (6) reliant l'axe (5) mobile au tube d'enroulement (3) mobile, ledit store de protection (1) étant caractérisé en ce que les moyens de blocage (10) de l'axe (5) sont agencés de manière à :
- permettre la rotation de l'axe (5) mobile dans le même sens de rotation que celui dans lequel les moyens de rappel (6) entrainent le tube d'enroulement (3) vers sa première position (PE), et
- permettre le blocage de la rotation de l'axe (5) mobile dans le sens de rotation opposé à celui dans lequel les moyens de rappel (6) entrainent le tube d'enroulement (3) vers sa première position (PE),

ainsi qu'un procédé de réglage de la tension dudit store de protection (1) et un procédé de démontage.

## Description

La présente invention concerne le domaine de la protection solaire et a plus particulièrement pour objet un store de protection pour véhicule ainsi qu'un procédé de réglage de la tension d'un store de protection et un procédé de démontage d'un écran d'un store de protection.

Il est connu de disposer de stores de protection dans des véhicules, notamment dans des compartiments de train.

Un tel store de protection pour véhicule comprend :
- un châssis,
- un tube d'enroulement mobile en rotation relativement au châssis,
- un écran mobile destiné à être enroulé et déroulé autour du tube d'enroulement mobile,
   ledit tube d'enroulement étant mobile entre une première position dans laquelle l'écran est dans une position enroulée et une deuxième position dans laquelle l'écran est dans une position déroulée,
- un axe mobile en rotation disposé à l'intérieur du tube d'enroulement,
- des moyens de blocage de la rotation de l'axe mobile relativement au châssis,
- des moyens de rappel reliant l'axe mobile au tube d'enroulement mobile, lesdits moyens de rappel étant agencés pour entrainer en rotation le tube d'enroulement vers sa première position.

Ces stores sont montés en usine et sont satisfaisants en ce qu'ils assurent parfaitement leur fonction de protection.

Cependant, leur montage en usine nécessite d'assurer le maintien en tension des moyens de rappel avant la mise en place des moyens de blocage assurant le blocage de la rotation de l'axe mobile relativement au châssis.

Ce procédé induit des difficultés d'assemblage en usine.

De plus, l'utilisation répétée du store de protection peut amener à se détendre les moyens de rappel qui nécessitent alors une remise en tension dans le cadre d'une opération de maintenance.

La remise en tension de ces moyens de rappel nécessite alors la dépose du store de protection, ce qui augmente considérablement les délais d'intervention.

La présente invention a pour but de résoudre tout ou partie des inconvénients mentionnés ci-dessus.

A cet effet, la présente invention a pour objet un store de protection du type précité **caractérisé en ce que** les moyens de blocage de l'axe sont agencés de manière à :
- autoriser la rotation de l'axe mobile dans le même sens de rotation que celui dans lequel les moyens de rappel entrainent le tube d'enroulement vers sa première position, et
- bloquer la rotation de l'axe mobile dans le sens de rotation opposé à celui dans lequel les moyens de rappel entrainent le tube d'enroulement vers sa première position.

Cette disposition permet de réaliser lors du montage du store de protection en usine, la mise en tension des moyens de rappel après le montage des différents éléments du store de protection, facilitant ainsi le montage du store de protection.

Cette disposition permet également de réalisation le réglage en tension des moyens de tension sans qu'il ne soit nécessaire de réaliser la dépose du store de protection.

Selon un aspect de l'invention, le store de protection comprend des moyens de réglage du positionnement de l'axe mobile agencés pour permettre de réaliser la rotation de l'axe mobile au moins dans le même sens de rotation que celui dans lequel les moyens de rappel entrainent le tube d'enroulement vers sa première position.

Cette disposition facilite la mise en rotation de l'axe.

Selon un aspect de l'invention, les moyens de réglage du positionnement de l'axe mobile comportent un écrou rendu solidaire de l'axe mobile.

Cette disposition permet une manipulation aisée des moyens de réglage du positionnement de l'axe mobile à partir d'outils facilement disponibles dans le commerce.

Selon un aspect de l'invention, les moyens de blocage comportent un dispositif du type roue à cliquet dans laquelle la roue est solidaire de l'axe mobile, le cliquet est relié au châssis, ladite roue à cliquet comportant des moyens de rappel du cliquet sur la roue.

Cette disposition permet d'assurer la fonction de blocage dans un sens de rotation tout en limitant l'encombrement des moyens de blocage.

Selon un aspect de l'invention, le cliquet est solidaire d'un moyen de préhension mobile entre une première position dans laquelle le positionnement du cliquet permet le blocage de la rotation de l'axe mobile dans le sens de rotation opposé à celui dans lequel les moyens de rappel entrainent le tube d'enroulement vers sa première position et une deuxième position dans laquelle le positionnement du cliquet permet la rotation de l'axe mobile dans le sens de rotation opposé à celui dans lequel les moyens de rappel entrainent le tube d'enroulement vers sa première position.

Cette disposition permet à l'opérateur de maintenance de détendre facilement les moyens de rappel s'il estime que ceux-ci exercent une tension excessive.

Selon un aspect de l'invention, le store de protection comprend des moyens de verrouillage du tube d'enroulement dans sa deuxième position.

Cette disposition permet à l'opérateur de maintenance d'accéder aux moyens de maintien de l'écran sur le tube d'enroulement sans avoir à maintenir le tube d'enroulement à l'encontre de la force exercée par les moyens de rappel.

Selon un aspect de l'invention, les moyens de verrouillage comprennent un taquet mobile entre une première position de déverrouillage dans laquelle le taquet est éloigné du tube d'enroulement et une deuxième position de verrouillage dans laquelle le taquet est inséré dans une encoche disposée sur le tube d'enroulement.

Cette disposition permet de maintenir facilement le tube d'enroulement.

Selon un aspect de l'invention, le store de protection comprend une barre de charge en deux parties, l'écran étant enserré entre les deux parties.

Cette disposition permet de libérer facilement la barre de charge de l'écran lors d'une opération de maintenance.

La présente invention a également pour objet un procédé de réglage de la tension d'un store de protection tel que décrit précédemment comportant les étapes consistant à :
- maintenir le tube d'enroulement dans une position fixe,
- saisir les moyens de réglage du positionnement de l'axe mobile,
- réaliser la rotation des moyens de réglage du positionnement de l'axe mobile dans le même sens de rotation que celui dans lequel les moyens de rappel entrainent le tube d'enroulement vers sa première position.

Ce procédé permet la mise en tension des moyens de rappel.

Selon une mise en oeuvre du procédé, celui-ci comporte les étapes consistant à :
- maintenir le tube d'enroulement dans une position fixe,
- saisir le moyen de préhension mobile,
- déplacer le moyen de préhension depuis sa première position vers sa deuxième position,
- relâcher le moyen de préhension mobile.

Ce procédé permet de détendre les moyens de rappel.

La présente invention a également pour objet un procédé de démontage d'un écran d'un store de protection tel que décrit précédemment comportant des étapes consistant à :
- amener le tube d'enroulement dans sa deuxième position,
- verrouiller la rotation du tube d'enroulement à l'aide des moyens de verrouillage du tube d'enroulement,
- désolidariser l'écran du tube d'enroulement.

Ce procédé permet de réaliser facilement la dépose de l'écran.

De toute façon, l'invention sera bien comprise à l'aide de la description qui suit, en référence au dessin schématique annexé représentant, à titre d'exemple non limitatif, un store de protection mettant en oeuvre les étapes de procédés selon l'invention.
La figure 1 illustre un store de protection selon l'état de la technique.
La figure 2 est une première vue partielle en perspective d'un store de protection selon l'invention.
La figure 3 est une vue par transparence du store de protection de la figure 2.
La figure 4 est une première vue latérale partielle d'un store de protection selon l'invention illustrant un moyen de préhension mobile dans une première position.
La figure 5 reproduit la vue de la figure 4 mais illustrant le moyen de préhension mobile dans une deuxième position.
La figure 6 est une deuxième vue partielle en perspective d'un store de protection selon l'invention illustrant un taquet mobile dans une première position.
La figure 7 reproduit la même vue que sur la figure 6 mais illustrant le taquet mobile dans une deuxième position.
La figure 8 est une deuxième vue latérale partielle d'un store de protection selon l'invention illustrant le maintien d'une barre de charge sur l'écran.
La figure 9 reproduit la même vue de la figure 8 mais illustrant la dépose de la barre de charge de l'écran.

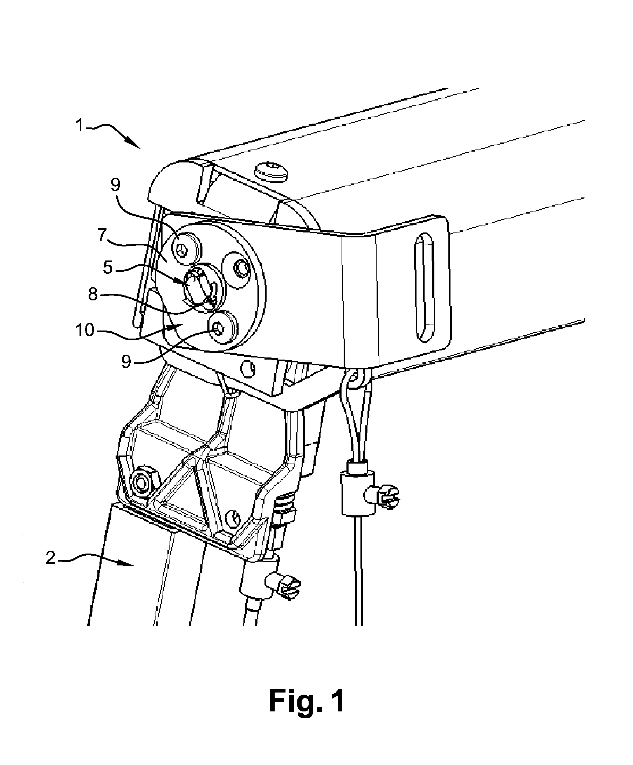

Comme illustré à la figure 1, un store de protection 1 selon l'état de la technique comprend un châssis 2 sur lequel est monté un tube d'enroulement 3 mobile en rotation relativement au châssis 2.

En outre, le store de protection 1 comprend un écran 4 mobile destiné à être enroulé et déroulé autour du tube d'enroulement 3 mobile.

Le tube d'enroulement 3 est mobile entre une première position PE dans laquelle l'écran 4 est dans une position enroulée et une deuxième position PD dans laquelle l'écran 4 est dans une position déroulée.

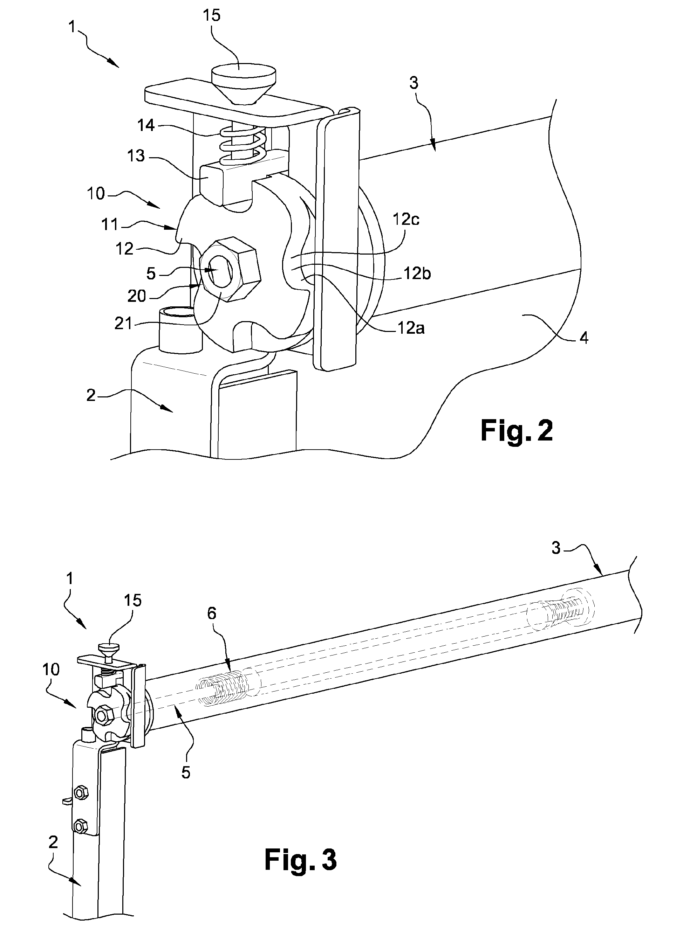

Comme illustré à la figure 3, le store de protection 1 comporte également un axe 5 mobile en rotation disposé à l'intérieur du tube d'enroulement 3, des moyens de blocage 10 de la rotation de l'axe 5 mobile relativement au châssis 2, ainsi que des moyens de rappel 6 reliant l'axe 5 mobile au tube d'enroulement 3 mobile, lesdits moyens de rappel 6 étant agencés pour entrainer en rotation le tube d'enroulement 3 vers sa première position PE.

Ces moyens de rappel 6 comprennent par exemple un ressort à spirale.

Lors du montage du store de protection 1 en usine, l'opérateur doit maintenir en position le tube d'enroulement 3 puis doit réaliser un nombre de rotation déterminé à l'axe 5 mobile de manière à mettre en tension les moyens de rappel 6.

Une fois que les moyens de rappel 6 ont été réglés à la tension désirée, l'opérateur pose les moyens de blocage 10 de manière à bloquer la rotation de l'axe 5 relativement au châssis 2.

L'axe 5 n'est donc mobile qu'au cours de l'opération de montage du store 1 en usine ou d'une opération de maintenance visant à régler la tension des moyens de rappel 6.

Au cours d'une utilisation normale du store de protection 1, l'axe 5 est immobile à l'intérieur du tube d'enroulement 3 mobile.

Les moyens de blocage 10 selon l'état de la technique comportent une plaque 7 munie d'un passage central 8 pour l'axe 5.

Le passage 8 présente une forme complémentaire à celle de la section de l'axe 5 de manière à solidariser en rotation cette plaque 7 et l'axe 5.

La plaque 7 comprend également deux orifices traversant permettant chacun le passage d'une vis 9 destinée à être vissée dans deux trous taraudés ménagés dans le châssis 2.

Ces vis 9 associés à la complémentarité de forme entre la plaque 7 et l'axe 5 empêchent toute rotation de l'axe 5 relativement au châssis 2.

Comme illustré à la figure 3, les moyens de blocage 10 d'un store de protection 1 diffèrent de ceux de l'état de la technique en ce qu'ils sont agencés de manière à :
- autoriser la rotation de l'axe 5 mobile dans le même sens de rotation que celui dans lequel les moyens de rappel 6 entrainent le tube d'enroulement 3 vers sa première position, et
- bloquer la rotation de l'axe 5 mobile dans le sens de rotation opposé à celui dans lequel les moyens de rappel 6 entrainent le tube d'enroulement vers sa première position.

Pour cela, les moyens de blocage 10 comprennent un dispositif 11 du type roue à cliquet.

Dans l'exemple présenté, ce dispositif 11 comporte une roue 12 solidaire de l'axe 5 mobile, un cliquet 13 relié au châssis 2, ainsi que des moyens de rappel 14 du cliquet 13 sur la roue 12.

L'axe 5 comprend un méplat 5a ménagé sur la surface latérale de l'axe 5 sur au moins une zone de l'axe 5 destinée à être recouverte par la roue 12.

La roue 12 comprend quant à elle un logement 12b disposé en regard du méplat de l'axe 5 et dans lequel est insérée une clavette 12c qui par complémentarité de forme avec le méplat de l'axe lie en rotation la roue 12 et l'axe 5.

La roue 12 comporte également des découpes circonférentielles 12a avec un profil déterminé dans lesquelles peut s'insérer le cliquet 13 lui aussi de profil déterminé de manière à autoriser le mouvement de rotation de la roue 12 dans un sens et à empêcher le mouvement de rotation de la roue 12 dans le sens opposé relativement au châssis.

Dans l'exemple présenté, les moyens de rappel 14 comprennent un ressort hélicoïdal en compression prenant appui entre le châssis 2 et le cliquet 13.

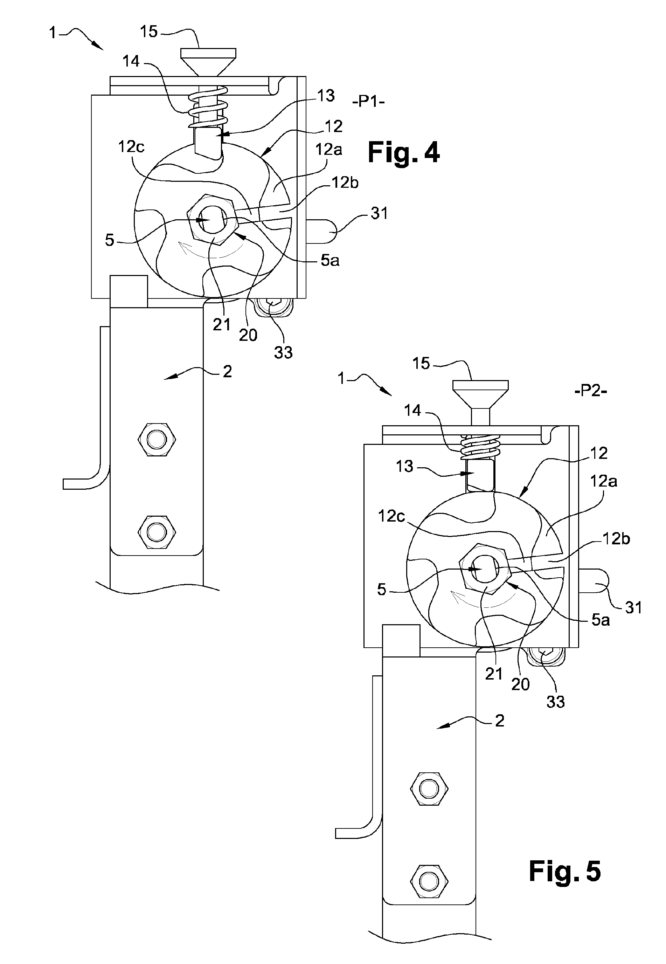

En outre, comme illustré aux figures 4 et 5, le cliquet 13 est rendu solidaire d'un moyen de préhension 15 mobile entre une première position P1 dans laquelle le positionnement du cliquet 13 permet le blocage de la rotation de l'axe 5 mobile dans le sens de rotation opposé à celui dans lequel les moyens de rappel 6 entrainent le tube d'enroulement 3 vers sa première position PE et une deuxième position P2 dans laquelle le positionnement du cliquet 13 permet la rotation de l'axe mobile dans le sens de rotation opposé à celui dans lequel les moyens de rappel 6 entrainent le tube d'enroulement 3 vers sa première position PE.

De plus, dans le mode de réalisation présenté, le store de protection 1 comprend des moyens de réglage 15 du positionnement de l'axe 5 mobile agencés pour permettre de réaliser la rotation de l'axe 5 mobile au moins dans le même sens de rotation que celui dans lequel les moyens de rappel 6 entrainent le tube d'enroulement 3 vers sa première position PE.

Dans l'exemple présenté, les moyens de réglage du positionnement 20 de l'axe 5 mobile comportent un écrou 21 rendu solidaire de l'axe 5 mobile.

Pour cela, l'axe 5 est fileté à son extrémité et le sens de vissage de l'écrou 21 est le même que sens de rotation dans lequel les moyens de rappel 6 entrainent le tube d'enroulement 3 vers sa première position PE.

L'écrou 21 vient en butée contre la roue 12 du dispositif 11 du type roue à cliquet.

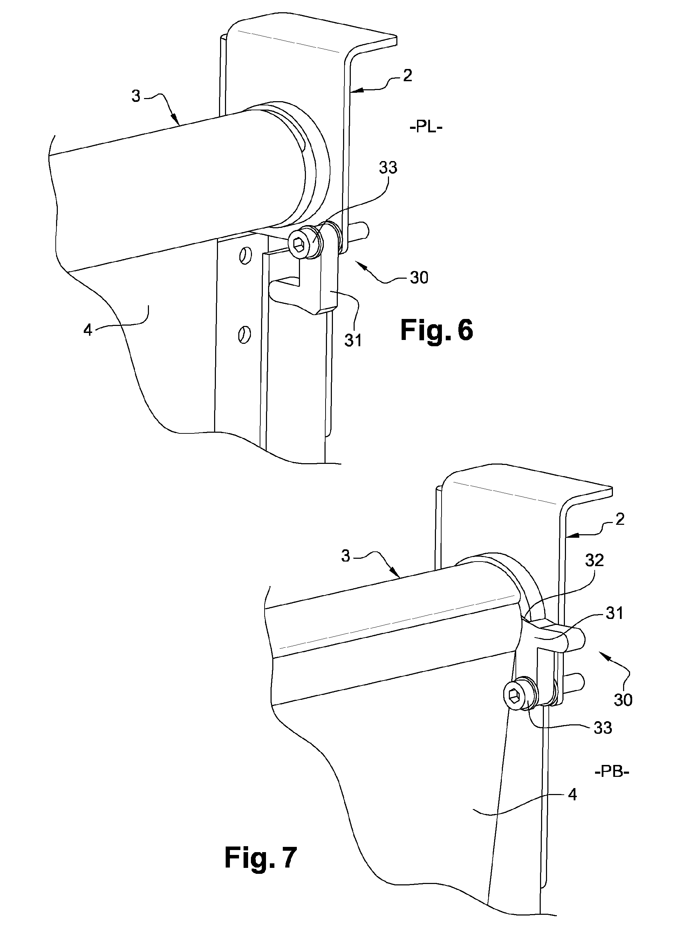

Comme cela est présenté aux figures 6 et 7, le store de protection 1 comporte également des moyens de verrouillage 30 du tube d'enroulement 3 dans sa deuxième position PD.

Dans l'exemple présenté, les moyens de verrouillage 30 comprennent un taquet 31 mobile entre une première position PL de déverrouillage dans laquelle le taquet 31 est éloigné du tube d'enroulement 3 et une deuxième position PB de verrouillage dans laquelle le taquet est 31 inséré dans une encoche 32 disposée sur le tube d'enroulement 3.

Le taquet 31 est articulé autour d'un axe représenté par une vis 33 relié au châssis 2.

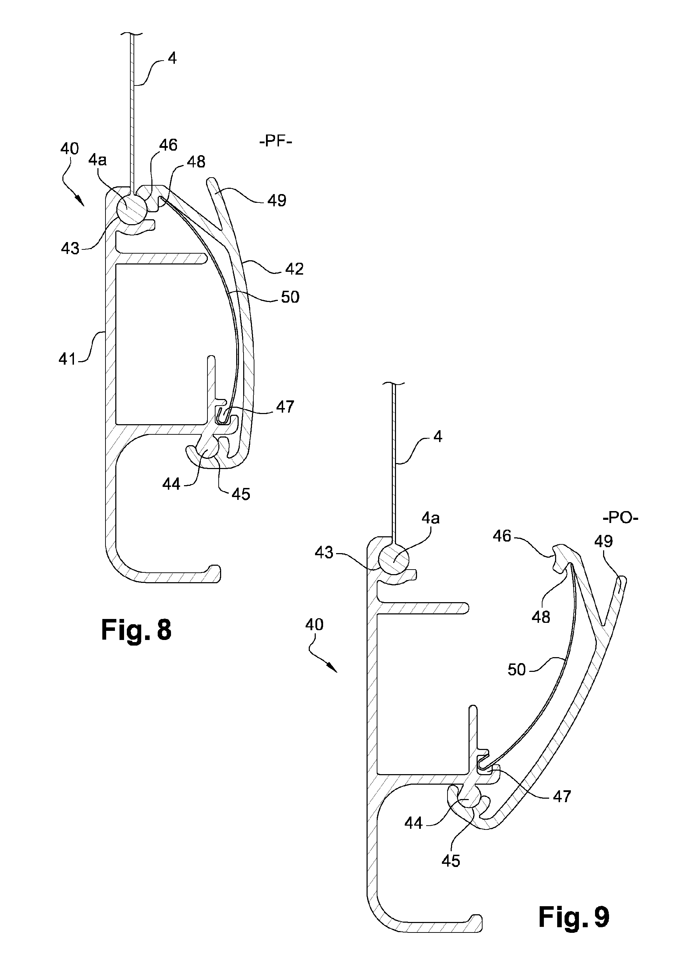

Enfin, comme cela est représenté aux figures 8 et 9, le store de protection 1 comporte une barre de charge 40 en deux parties 41, 42, l'écran 3 étant enserré entre les deux parties 41, 42.

La fonction de la barre de charge 40 consiste à lester l'écran 4 de manière à le tendre lors des différentes phases d'enroulement et de déroulement.

L'écran 4 comprend un jonc 4a longitudinal sur son extrémité permettant la fixation de la barre de charge 40 sur l'écran 4.

A cet effet, la première partie 41 de la barre de charge 40 comprend un évidement 43 cylindrique dans lequel vient se loger le jonc 4a de l'écran 4 ainsi qu'un bourrelet 44 cylindrique longitudinal sur lequel peut s'articuler la deuxième partie 42 de la barre de charge 4.

Pour cela, la deuxième partie 42 de la barre de charge 40 comprend également un évidement 45 cylindrique longitudinal agencé pour réaliser une articulation avec le bourrelet 44 de la première partie 41 de la barre de charge 40.

Ainsi, la deuxième partie 42 de la barre de charge 40 est mobile relativement à la première partie 41 entre une position fermé PF de blocage illustrée à la figure 8 et une position ouverte PO de déblocage illustrée à la figure 9.

La deuxième partie 42 de la barre de charge 40 présente une partie d'appui 46 de forme complémentaire à celle du jonc 4a si bien que dans la position fermé PF cette partie d'appui 46 exerce une pression sur le jonc de manière à maintenir celui-ci dans l'évidement 43 de la première partie 41 de la barre de charge 40.

Cette pression est exercée par un ressort à lame 50 maintenu entre une première zone de maintien 47 située sur la première partie 41 de la barre de charge 40 et une deuxième zone de maintien 48 située sur la deuxième partie 42 de la barre de charge 40.

Une zone de préhension 49 est également agencée sur la deuxième partie 42 de la barre de charge 40 de manière à permettre à un opérateur d'amener la deuxième partie 42 de la barre de charge 40 vers sa position ouverte PO.

La présente invention a également pour objet un procédé de réglage de la tension d'un store de protection 1 tel que présenté précédemment comportant les étapes consistant à :
- maintenir le tube d'enroulement dans une position fixe,
- saisir les moyens de réglage 20 du positionnement de l'axe 5 mobile, et
- réaliser la rotation des moyens de réglage 20 du positionnement de l'axe 5 mobile dans le même sens de rotation que celui dans lequel les moyens de rappel 6 entrainent le tube d'enroulement 3 vers sa première position PE.

Ainsi, un opérateur désirant augmenter la tension de l'écran 4 du store de protection 1 en usine ou au cours d'une opération de maintenance commence par maintenir le tube d'enroulement 3 en position.

Peu importe cette position, celle-ci peut par exemple être la première position PE ou la deuxième position PD ou une position intermédiaire.

L'opérateur peut réaliser ce maintien en position à l'aide d'une main ou du taquet 31.

Puis, l'opérateur se munit par exemple d'une clé plate puis l'engage sur l'écrou 21.

L'opérateur effectue ensuite une rotation de l'écrou 21 dans le sens du vissage ce qui va avoir pour conséquence d'entrainer l'axe 5 en rotation et par la même occasion de tendre les moyens de rappel 6 reliant l'axe 5 au tube d'enroulement 3.

Pour détendre les moyens de rappel 6, l'opérateur procède tout d'abord en maintenant en position le tube d'enroulement 3 de la même façon que précédemment.

L'opérateur saisit ensuite le moyen de préhension 15 mobile puis le déplace depuis sa première position P1 vers sa deuxième position P2.

Sous l'action des moyens de rappel 6, le passage de la première position P1 vers la deuxième position P2 du moyen de préhension 15 va avoir pour effet de dégager le cliquet 13 des découpes circonférentielles 12a de la roue 12 et d'entrainer la roue 12 et donc l'axe 5 mobile dans le sens de rotation opposé à celui dans lequel les moyens de rappel 6 entrainent le tube d'enroulement 6 vers sa première position PE.

L'opérateur relâche alors le moyen de préhension 15 mobile lorsqu'il estime que la tension des moyens de tension 6 et donc de l'écran 4 est suffisante.

Bien entendu, l'opérateur peut réitérer autant de fois qu'il le souhaite les procédés de réglage de la tension des moyens de rappel explicités ci-dessus jusqu'à aboutir à un réglage satisfaisant.

Enfin, l'invention a également pour objet un procédé de démontage d'un écran 4 d'un store de protection 1 tel que décrit précédemment comportant des étapes consistant à :
- amener le tube d'enroulement 3 dans sa deuxième position PD,
- verrouiller la rotation du tube d'enroulement 3 à l'aide des moyens de verrouillage 30 du tube d'enroulement 3, et
- désolidariser l'écran 4 du tube d'enroulement 3.

Le fait d'amener le tube d'enroulement 3 dans sa deuxième position PD révèle les moyens de maintien de l'écran 4 sur le tube d'enroulement 3.

Ces moyens de maintien peuvent par exemple être du type Dual Lock^{®} commercialisé par la société 3M^{®}.

Le verrouillage de la rotation du tube d'enroulement 3 est par exemple réalisé à l'aide du taquet 31.

Ainsi, l'encoche 32 disposée sur le tube d'enroulement 3 comprend un positionnement déterminé sur le tube d'enroulement 3 de manière à ce que les moyens de maintien soient facilement accessibles à l'opérateur lors du blocage du tube d'enroulement par le taquet 31.

Il ne reste alors à l'opérateur qu'à désolidariser l'écran 4 du tube d'enroulement 3 pour éventuellement le remplacer par un autre.

Bien que l'invention ait été décrite en liaison avec des exemples particuliers de réalisation, il est bien évident qu'elle n'y est nullement limitée et qu'elle comprend tous les équivalents techniques des moyens décrits ou des étapes décrites ainsi que leurs combinaisons.

C'est ainsi que le cliquet 13 peut avoir une forme différente de celle présentée ci-dessus, par exemple une forme allongée courbe avec un axe de rotation relativement au châssis et des moyens de rappel 14 comprenant un ressort radial prenant appui d'une part sur le châssis 2 et d'autre part sur le cliquet 13.

## Revendications

1. Store de protection (1) pour véhicule comprenant :
- un châssis (2),
- un tube d'enroulement (3) mobile en rotation relativement au châssis,
- un écran (4) mobile destiné à être enroulé et déroulé autour du tube d'enroulement (3) mobile,
ledit tube d'enroulement (3) étant mobile entre une première position (PE) dans laquelle l'écran (4) est dans une position enroulée et une deuxième position (PD) dans laquelle l'écran (4) est dans une position déroulée,
- un axe (5) mobile en rotation disposé à l'intérieur du tube d'enroulement (3),
- des moyens de blocage (10) de la rotation de l'axe (5) mobile relativement au châssis (2),
- des moyens de rappel (6) reliant l'axe (5) mobile au tube d'enroulement (3) mobile, lesdits moyens de rappel (6) étant agencés pour entrainer en rotation le tube d'enroulement (3) vers sa première position (PE),
ledit store de protection (1) étant **caractérisé en ce que** les moyens de blocage (10) de l'axe (5) sont agencés de manière à :
- autoriser la rotation de l'axe (5) mobile dans le même sens de rotation que celui dans lequel les moyens de rappel (6) entrainent le tube d'enroulement (3) vers sa première position (PE), et
- bloquer la rotation de l'axe (5) mobile dans le sens de rotation opposé à celui dans lequel les moyens de rappel (6) entrainent le tube d'enroulement (3) vers sa première position (PE).

2. Store de protection (1) selon la revendication 1, comprenant des moyens de réglage (20) du positionnement de l'axe (5) mobile agencés pour permettre de réaliser la rotation de l'axe (5) mobile au moins dans le même sens de rotation que celui dans lequel les moyens de rappel (6) entrainent le tube d'enroulement (3) vers sa première position (PE).

3. Store de protection (1) selon la revendication 2, dans lequel les moyens de réglage (20) du positionnement de l'axe mobile comportent un écrou (21) rendu solidaire de l'axe (5) mobile.

4. Store de protection (1) selon l'une des revendications 1 à 3, dans lequel les moyens de blocage (10) comportent un dispositif (11) du type roue à cliquet dans laquelle la roue (12) est solidaire de l'axe (5) mobile, le cliquet (13) est relié au châssis (2), ladite roue à cliquet comportant des moyens de rappel (14) du cliquet (13) sur la roue (12).

5. Store de protection (1) selon la revendication 4, dans lequel le cliquet (13) est solidaire d'un moyen de préhension (15) mobile entre une première position (P1) dans laquelle le positionnement du cliquet (13) permet le blocage de la rotation de l'axe (5) mobile dans le sens de rotation opposé à celui dans lequel les moyens de rappel (6) entrainent le tube d'enroulement (3) vers sa première position (PE) et une deuxième position (P2) dans laquelle le positionnement du cliquet (13) permet la rotation de l'axe (5) mobile dans le sens de rotation opposé à celui dans lequel les moyens de rappel (6) entrainent le tube d'enroulement (3) vers sa première position (PE).

6. Store de protection (1) selon l'une des revendications 1 à 5, comportant des moyens de verrouillage (30) du tube d'enroulement (3) dans sa deuxième position (PE).

7. Store de protection (1) selon la revendication 6 dans lequel les moyens de verrouillage (30) comprennent un taquet (31) mobile entre une première position (PL) de déverrouillage dans laquelle le taquet (31) est éloigné du tube d'enroulement (3) et une deuxième position (PB) de verrouillage dans laquelle le taquet (31) est inséré dans une encoche (32) disposée sur le tube d'enroulement (3).

8. Store de protection (1) selon l'une des revendications 1 à 7, comportant une barre de charge (40) en deux parties (41, 42), l'écran (4) étant enserré entre les deux parties (41, 42).

9. Procédé de réglage de la tension d'un store de protection (1) selon la revendication 2 ou l'une des revendications 3 à 8 pourvue qu'elles dépendent de la revendication 2 comportant les étapes consistant à :
- maintenir le tube d'enroulement (3) dans une position fixe,
- saisir les moyens de réglage (20) du positionnement de l'axe (5) mobile,
- réaliser la rotation des moyens de réglage (20) du positionnement de l'axe (5) mobile dans le même sens de rotation que celui dans lequel les moyens de rappel (6) entrainent le tube d'enroulement (3) vers sa première position (PE).

10. Procédé de réglage selon la revendication 9 de la tension d'un store de protection (1) selon la revendication 5 ou l'une des revendications 6 à 8 pourvue qu'elle dépende de la revendication 5 comportant les étapes consistant à :
- maintenir le tube d'enroulement (3) dans une position fixe,
- saisir le moyen de préhension (15) mobile,
- déplacer le moyen de préhension (15) depuis sa première position (P1) vers sa deuxième position (P2),
- relâcher le moyen de préhension (15) mobile.

11. Procédé de démontage d'un écran d'un store de protection (1) selon la revendication 6 ou 7 à 8 pourvu qu'elles dépendent de la revendication 6 comportant des étapes consistant à :
- amener le tube d'enroulement (3) dans sa deuxième position (PD),
- verrouiller la rotation du tube d'enroulement (3) à l'aide des moyens de verrouillage (30) du tube d'enroulement (3),
- désolidariser l'écran (4) du tube d'enroulement (3).
